# EUROPÄISCHE PATENTSCHRIFT

(11) **EP 1 824 797 B1**
(45) Veröffentlichungstag und Bekanntmachung des Hinweises auf die Patenterteilung: **26.03.2008**
(21) Anmeldenummer: 05818024.1
(22) Anmeldetag: 09.12.2005
(51) Int. Cl.: C04B 35/573, G01B 1/00

(54) **KALIBRIERKÖRPER, LEHRE ODER MESSEINRICHTUNG, VORZUGSWEISE GEWINDEMESSEINRICHTUNG UND VERFAHREN ZUR HERSTELLUNG DERSELBEN**
CALIBRATION BODY, CALIBER OR MEASURING DEVICE, PREFERABLY SCREW THREAD GAUGE AND METHOD FOR PRODUCING THE SAME
CORPS DE CALIBRAGE, GABARIT OU DISPOSITIF DE MESURE, DE PREFERENCE INSTRUMENT DE MESURE DE FILETAGE ET SON PROCEDE DE PRODUCTION

(30) Priorität: 17.12.2004 DE 102004061438
(43) Veröffentlichungstag der Anmeldung: 29.08.2007
(73) Patentinhaber: SGL Carbon AG, 86405 Meitingen (DE)
(72) Erfinder: RICHTER, Norbert, 86153 Augsburg (DE); BAUMANN, Stefan, 86156 Augsburg (DE); BENITSCH, Bodo, 86647 Buttenwiesen (DE); SCHMID, Thomas, 86672 Thierhaupten (DE); FENDT, Franz, 86462 Langweid (DE)
(86) Internationale Anmeldenummer: PCT/EP2005/013248
(87) Internationale Veröffentlichungsnummer: WO 2006/066743

(56) Entgegenhaltungen:
- EP-A- 1 464 634
- DE-A1- 10 003 176
- DE-A1- 19 710 105
- US-A1- 2004 097 360

## Beschreibung

### Stand der Technik

Die Erfindung betrifft einen Kalibrierkörper, eine Lehre oder eine Messeinrichtung, vorzugsweise eine Gewindemesseinrichtung, bestehend wenigstens teilweise aus einem C-SiC-Körper, der aus einem porösen und kohlenstoffhaltigen, mit Si flüssig infiltrierten Werkstoff aufgebaut ist, wobei das Si wenigstens teilweise durch Reaktion mit Kohlenstoff zu SiC umgewandelt wird, sowie ein Verfahren zur Herstellung derselben, gemäß den Oberbegriffen der Ansprüche 1 und 13.

Unter einem Kalibierkörper oder unter einer Lehre soll im folgenden eine Maßverkörperung verstanden werden, um durch Vergleich zu beurteilen, ob eine Struktur oder ein Bauteil der Maßverkörperung entspricht oder nicht oder um eine Messeinrichtung zu kalibrieren. Bei Messeinrichtungen handelt es sich hingegen um Einrichtungen, welche die Ist-Maße einer Struktur oder eines Bauteils messen oder Werte liefern, aus welchen diese abgeleitet werden können.

Ein gattungsgemäßer Kalibrierkörper bzw. ein gattungsgemäßes Verfahren sind aus der DE 100 03 176 A1 bekannt. Zur Herstellung des dort beschriebenen C/C-SiC-Werkstoffs werden Kohlenstofffasern in Form von Matten, gewebt oder gewirkt verwendet. Gemäß der Entgegenhaltung führt eine kürzere Faserlänge als 3 mm zu einer vermehrten Reaktion der Fasern mit dem flüssigen Silizium unter Bildung von SiC. Auch aus der US 2004/0097360 A1 ist ein C/C-SiC-Werkstoff für Kalibierkörper bekannt, bei welchem als Ausgangsbasis Kohlenstofffaserbündel verwendet werden.

Diejenigen Kohlenstofffasern, welche nicht an der Reaktion mit Si teilgenommen haben, sind in die Matrix des C/C-SiC-Werkstoffs eingebettet und tragen zur Erhöhung der Duktilität des Werkstoffs bei. Darüber hinaus beträgt der Gesamtanteil an Si und SiC höchstens 60 Vol%. Hieraus resultiert ein Werkstoff, welcher aufgrund seiner durch die Faser bedingten relativ geringen lokalen Härte und Duktilität höhere Anforderungen an die Verschleißbeständigkeit, welche bei Kalibrierkörpern und Messeinrichtungen, die in wiederholten Gleitreibkontakt mit der zu prüfenden oder zu vermessenden Struktur treten, eine wesentliche Rolle spielen, nicht erfüllen kann.

Aufgabe der Erfindung ist es demzufolge, einen Kalibrierkörper, eine Lehre oder eine Messeinrichtung sowie ein Verfahren zur Herstellung derselben derart weiterzubilden, dass sich eine höhere Verschleißbeständigkeit ergibt.

Diese Aufgabe wird durch die in den Patentansprüchen 1 und 13 angegebenen Merkmale gelöst.

Die Erfindung basiert auf dem Gedanken, das C-SiC-Material aus einem C-C-Werkstoff auf der Basis eines Kohlenstofffilz-Materials zu erzeugen.

Unter einem Filz soll im folgenden ein durch Pressen von ineinander regellos verschlungenen Einzelfasem oder Faserfragmenten erzeugtes Material verstanden werden. Ein solcher Kohlenstofffilz hat gegenüber den beim Stand der Technik verwendeten Kohlenstoffmatten mit dicht gepackten Faserbündeln (Rorings oder Roringsegmenten) aus parallelen Fasern bzw. Filamenten eine geringere Dichte und folglich zwischen den Fasern mehr Raum für das infiltrierte Silizium, so dass aufgrund der größeren zur Verfügung stehenden Reaktionsfläche im wesentlichen der gesamte Kohlenstoff des Filzes während der Si-Flüssiginfiltration zu SiC (Siliziumkarbid) reagiert. Ergebnis ist ein Körper mit einer aus den drei Komponenten C, Si, und SiC gebildeten Matrix, während aufgrund des nahezu vollständigen Abreagierens des Kohlenstofffilzes in der Matrix vorzugsweise keine oder nahezu keine Kohlenstoffbestandteile mehr vorhanden sind, welche sich negativ auf die Verschleißbeständigkeit auswirken könnten, da sie die Duktilität des Werkstoffs erhöhen. Dieser matrixdominante Werkstoff eignet sich aufgrund seiner guten Verschleißbeständigkeit hervorragend zur Verwendung in Kalibrierkörpern, Lehren oder Messeinrichtungen, welche oder von weichen Bauteile wiederholt in Gleitreibkontakt mit der zu prüfenden Struktur treten.

### Zeichnung

In der Zeichnung zeigt
- Fig.1: eine Seitenansicht einer Elektrode mit einem konischen Innengewinde und einem Nippel mit konischem Außengewinde;
- Fig.2: eine Querschnittsdarstellung einer Gewindemesseinrichtung zur Vermessung des konischen Innengewindes der Elektrode, welche SiC-Körper beinhaltet, die gemäß einer bevorzugten Ausführungsform des erfindungsgemäßen Verfahrens hergestellt wurden.

### Beschreibung von Ausführungsbeispielen

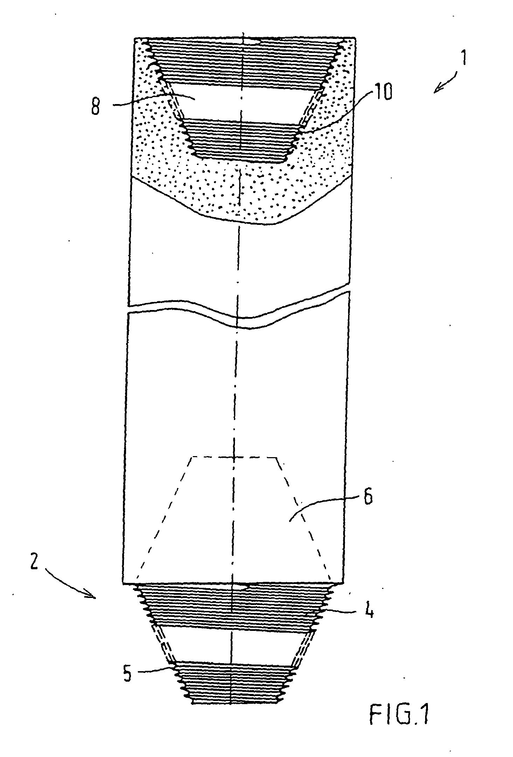

In Fig.1 ist ein insgesamt mit 1 bezeichneter Abschnitt einer Graphitelektrode dargestellt, welche zur Stromübertragung beim Schmelzen von Elektrostahl im elektrischen Lichtbogenofen eingesetzt wird. Da sich aufgrund des elektrischen Lichtbogens hierbei auch die Graphitelektrode mit der Zeit verbraucht, müssen ständig Graphitelektrodenabschnitte 1 auf der dem Lichtbogen abgewandten Seite nachgeführt werden, was dadurch realisiert wird, dass ein neuer Graphitelektrodenabschnitt 1 an den gerade in Gebrauch befindlichen Abschnitt über eine Gewindeverbindung 2 angeschraubt wird. Die Gewindeverbindung 2 umfasst einen vorzugsweise separaten, doppelkegelförmigen Nippel 4 mit Außengewinde 5, von welchem in Fig.1 eine Hälfte in ein Innengewinde einer konischen Sacklochbohrung 6 des Graphitelektrodenabschnitts 1 eingeschraubt ist, weiche im übrigen identisch, aber spiegelverkehrt zu einer weiteren konischen sacklochbohrung 8 mit Innengewinde 10 ist, welche in Fig,1 aufgebrochen dargestellt ist. Es ist leicht vorstellbar, dass dann quasi in einer Endlosreihe stets ein Graphitelektrodenabschnitt 1 an den gerade in Gebrauch befindlichen Abschnitt angeschraubt und so die für einen kontinuierlichen Schmelzprozess notwendige Nachführung von Elektrodenmaterial gewährleistet ist.

Da die Graphitelektrodenabschnitte 1 relativ groß bauen und von Hand oder durch Roboter zueinander positioniert und verschraubt werden, ist die Ausgestaltung der Innengewinde 10 als konische Gewinde aufgrund der dann zentrierenden Wirkung und einer schneller vonstatten gehenden Verschraubung vorteilhaft. Damit eine sichere und steife Verbindung sowie eine Flucht der Mittelachsen ohne größere Achswinkelabweichungen der miteinander verschraubten Graphitelektrodenabschnitte 1 gewährleistet ist, müssen bei der Gewindeverbindung 2 gewisse Fertigungstoleranzen hinsichtlich bestimmter, diese Verbindung charakterisierender Werte eingehalten werden, wie beispielsweise der Kegelwinkel und der größte Durchmesser der konischen Sacklochbohrung 8.

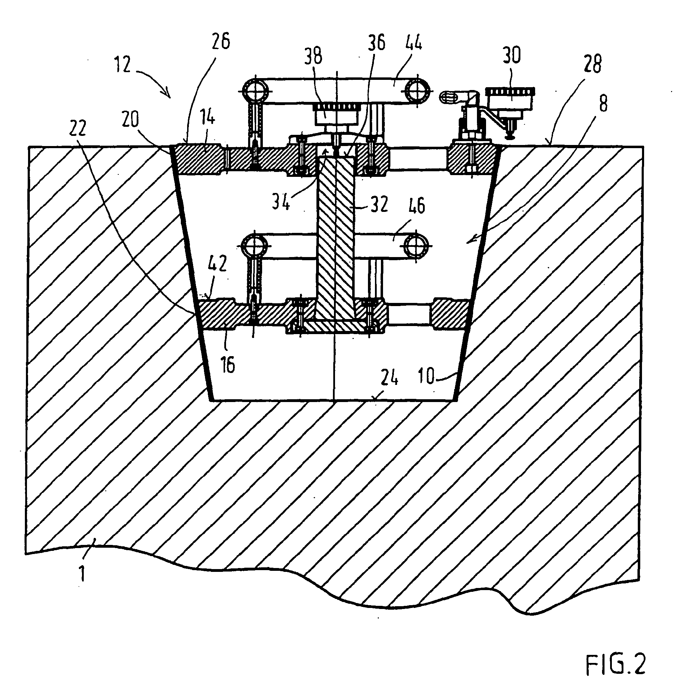

Zur Toleranzprüfung dient die in Fig.2 gezeigte Gewindemesseinrichtung 12, welche zwei kreisrunde Scheiben 14, 16 mit unterschiedlichen Durchmessern umfasst, deren radial äußere Umfangsflächen komplementär konisch zu der beispielsweise zu prüfenden Sacklochbohrung 8 ausgebildet sind und jeweils mit einem Außengewinde 20, 22 versehen sind, so dass zuerst die kleinere, in Fig.2 untere Scheibe 16 und dann die größere, in Fig.2 obere Scheibe 20 in die Sacklochbohrung 8 eingeschraubt werden können. Dabei ist der Durchmesser der größeren Scheibe 14 vorzugsweise derart bemessen, dass im vollständig eingeschraubten Zustand ihre vom Boden 24 der Sacklochbohrung 8 weg weisende Außenfläche 26 mit der ebenen Stirnfläche 28 des Graphitelektrodenabschnitts 1 zumindest im Bereich des Randes der Sacklochbohrung 18 annähernd koplanar ist. Die größere Scheibe 14 trägt an ihrer Außenfläche 26 eine erste Messuhr 30, mit welcher ihre Einschraubtiefe relativ zu einer Referenzfläche, die vorzugsweise durch die Stirnfläche 28 des Graphitelektrodenabschnitts 1 gebildet wird, als erstes charakteristisches Maß ermittelbar ist.

Weiterhin stehen die beiden Scheiben 14, 16 durch einen Zapfen 32 miteinander in Verbindung, welcher an der kleineren Scheibe 16 zentral und senkrecht festgelegt in eine zentrale Durchgangsöffnung 34 in der größeren Scheibe 14 mit geringem Spiel eingreift, und, wenn die kleinere Scheibe 16 ebenfalls vollständig eingeschraubt ist, mit seiner vom Boden 24 der Sacklochbohrung 18 weg weisenden Stirnfläche 36 sich nicht ganz bis an die Ebene der Außenfläche 26 der größeren Scheibe 14 heran erstreckt, wodurch ein von der Relativlage der beiden Scheiben 14, 16 bzw. von der Einschraubtiefe der kleineren Scheibe 16 abhängiges zweites charakteristisches Maß vorhanden ist, das von einer von der größeren Scheibe 14 getragenen zweiten Messuhr 38 erfassbar ist. Abhängig von den beiden charakteristischen Maßen können dann beispielsweise der Kegelwinkel und der größte Durchmesser der konischen Sacklochbohrung 8 bzw. des Innengewindes 10 berechnet werden.

Zur Handhabung der Gewindemesseinrichtung 12 sind an den jeweils vom Boden 24 der Sacklochbohrung 8 weg weisenden Flächen 26, 42 der beiden Scheiben 14, 16 Handgriffe 44, 46 angebracht, die vorzugsweise aus Aluminium gefertigt sind, Da die Graphitelektrodenabschnitte 1 und insbesondere deren Gewindeverbindungen 2 regelmäßig hinsichtlich ihrer Maßhaltigkeit überprüft werden, ist es zur Messung notwendig, die Gewindemesseinrichtung 1 wiederholt Mal in Sacklochbohrungen 8 einzuschrauben, wobei die Außengewinde 20, 22 der beiden Scheiben 14, 16 mit den Innengewinden 10 in Gleitreibkontakt treten. Ein allzu hoher Verschleiß an den radial äußeren Umfangsflächen der beiden Scheiben 14, 16 würde in einer größeren Einschraubtiefe resultieren und somit das Messergebnis verfälschen. Folglich ist eine hohe Verschleißbeständigkeit der beiden Scheiben 14, 16 wünschenswert.

Aus diesem Grund sind vorzugsweise zumindest die Gewindebereiche der beiden Scheiben 14, 16 der Gewindemesseinrichtung 12 aus einem besonders verschleißbeständigen Material gefertigt, dessen Herstellung im folgenden beschrieben wird.

Bei den beiden Scheiben 14, 16 handelt es sich zumindest im Gewindebereich jeweils um SiC-Körper, die aus einem porösen kohlenstoffhaltigen und mit Si flüssig infiltrierten Werkstoff aufgebaut sind, wobei das Si wenigstens teilweise durch Reaktion mit Kohlenstoff zu SiC umgewandelt wird. Die SiC-Körper 14, 16 werden aus einem C-C-Werkstoff auf der Basis von Kohlenstofffilz-Material und/oder fein und offenporösen Kohlenstoffstrukturen und/oder auf der auf Basis von pyrolisiertem Holz erzeugt.

Das Kohlenstofffilz-Material kann beispielsweise ein Zellwollfilz, ein Polyacrylnitril (PAN)-Filz oder ein Viskose-Filz oder eine Kombination dieser Materialien sein. Das Kohlenstofffilz-Material kann einen lagenförmigen Aufbau aufweisen, d.h. zur Ausbildung von Platten einer bestimmten Dicke ist der Filz in mehreren, parallelen Lagen geschichtet. Das Filzmaterial kann aber auch in regelloser Form vorliegen.

Gemäß einer besonders zu bevorzugenden Ausführungsform des Herstellverfahrens wird Kohlenstofffilz-Material verwendet und mit einem Polymer, vorzugsweise Phenolharz imprägniert und ausgehärtet, wodurch Platten aus Kohlenstofffaser durchsetztem Kunststoff (CFK) entstehen. Anschließend werden diese CFK-Halbzeuge karbonisiert bzw. pyrolisiert. Dabei liegt die Karbonisierungs- oder Pyrolisierungstemperatur in einem Bereich von vorzugsweise 900° C bis 1000° C. Dieser Verfahrensschritt kann mehrmals wiederholt werden. Durch die Anzahl der aus Nachimprägnierung und Karbonisierung bestehenden sog. Nachverdichtungen kann die Porosität der CFK-Platten eingestellt werden, als sich die Porengröße durch Nachimprägnieren mit Phenolharz unter anschließender Karbonisierung reduziert. Die Verwendung von lagengeschichtetem Filzmaterial als Ausgangsprodukt hat allerdings zur Folge, dass die hieraus gefertigten CFK-Platten wegen der horizontalen Trennebenen zwischen den Filzlagen anisotrope Materialeigenschaften aufweisen können. Für den Einsatzzweck als Scheibenmaterial in Gewindemesseinrichtungen spielt dies jedoch keine entscheidende Rolle.

Um anisotropes Materialverhalten demgegenüber zu minimieren bzw. völlig auszuschließen, kann der Filz gemahlen werden, wodurch die Lagenstruktur des Materials aufgelöst wird. Die so entstandenen Filz-Partikel können mit Harz vermengt zu CFK-Platten verpresst werden. Um weitere flüchtig Bestandteile aus den pyrolisierten Platten zu eliminieren, werden die Platten vorzugsweise graphitiert, wobei die Graphitierungstemperatur maximal 3000° C beträgt.

Weil der C-C-Werkstoff verglichen mit dem nach dem letzten Fertigungsschritt erhaltenen C-SiC-Werkstoff relativ weich ist, werden die C-C-Platten endkonturnah bearbeitet, was im vorliegenden Fall bedeutet, dass aus den Platten die beiden Scheiben 14, 16 mit im wesentlichen endformnahen Durchmesser herausgearbeitet werden.

Anschließend werden die C-C-Scheiben 14, 16 durch Flüssiginfiltration von Si in Scheiben 14, 16 aus C-SiC-Werkstoff umgewandelt. Hierbei wird der Kohlenstoff des Kohlenstofffilzes wenigstens teilweise, idealerweise vollständig durch Reaktion mit Si zu SiC umgewandelt, so dass im Ergebnis ein aus den drei Komponenten SiC, Si und C gebildeter Keramikkörper entsteht, wobei aufgrund des nahezu vollständigen Abreagieren des Kohlenstoffs des Kohlenstofffilzes mit dem infiltrierten Si keine oder nahezu keine Kohlenstofffasern mehr vorhanden ist. Die Gefügestruktur ist sehr fein, die Dichte der C-SiC-Körper 14, 16 beträgt beispielsweise 2,7 g/cm³.

Die im wesentlichen kohlenstofffaserfreien C-SiC-Scheiben 14, 16 weisen einen Anteil an Si und SiC zwischen 70 Massen% und 90 Massen% und einen Anteil an Kohlenstoff zwischen 10 Massen% und 30 Massen% auf. Vorzugsweise kann der Anteil an Si zwischen 30 Massen% und 35 Massen%, der Anteil an SiC zwischen 50 Massen% und 60 Massen% und der Anteil an Kohlenstoff zwischen 10 Massen% und 15 Massen% betragen.

In den Tabellen 1.1 und 1.2 sind ausgewählte mechanische und thermische Materialeigenschaften des C-SiC-Materials der Scheiben 14, 16 aufgeführt, wenn als Ausgangsmaterial Kohlenstofffilz mit lagenförmigem Aufbau verwendet wird.

**Tabelle 1.1**

| **Mechanische Eigenschaften** | | | |
|---|---|---|---|
| **Größe** | **Temperatur** | **Einheit** | **Typischer Wert** |
| Dichte | | g/cm³ | 2,7 |
| Zugfestigkeit | 20°C | MPa | 80 |
| | 1200°C | MPa | 80 |
| Zugmodul | 20°C | GPa | 230 |
| | 1200°C | GPa | 230 |
| Bruchdehnung | | % | 0,04 |
| Biegefestigkeit | 20°C | MPa | 150 |
| (3-Punkt) | 1200°C | MPa | 130 |
| Biegemodul | 20°C | GPa | 150 |
| (3-Punkt) | 1200°C | GPa | 110 |
| Druckfestigkeit | 20°C | MPa | 1300 |
| | 1200°C | MPa | 1300 |
| Risszähigkeit | | K_{1C} | 5 |
| Weibull-Modul | | m | 25 |

**Tabelle 1.2**

| **Thermische Eigenschaften** | | | |
|---|---|---|---|
| **Größe** | **Temperatur** | **Einheit** | **Typischer Wert** |
| Maximale Einsatztemperatur | | °C | 1350 |
| Thermoschockbeständigkeit | | K/s | 2100 |
| Wärmedehnung | 0°C.. 300°C | 10⁻⁶/K | 3,5 |
| | 300°C.. 1200°C | 10⁻⁶/K | 4,5 |
| Wärmeleitfähigkeit | 20°C | W/m·K | 125 |
| | 1200°C | W/m·K | 80 |
| Spezifische | 20°C | J/g·K | 0,8 |
| Wärmekapazität | 1200°C | J/g·K | 1,2 |

Die Tabellen 2.1 und 2.2 zeigen demgegenüber die mechanischen und thermischen Materialeigenschaften des C-SiC-Materials der Scheiben 14, 16, wenn aus gemahlenem Kohlenstofffilz CFK-Platten verpresst werden.

Im letzten Verfahrensschritt werden die beiden Scheiben 14, 16 durch Schleifen auf den Enddurchmesser bearbeitet und die Außengewinde 20, 22 eingeschliffen.

Anstatt Kohlenstofffilz können auch jegliche fein- und offenporöse Kohlenstoffstrukturen und/oder pyrolisiertes Holz als Ausgangsmaterial verwendet werden. Die Erfindung schlägt daher erstmalig eine Verwendung von auf Kohlenstofffilz und/oder fein- und offenporösen Kohlenstoffstrukturen und/oder auf der Basis von pyrolisiertem Holz basiertem C-SiC-Material für Kalibierkörper, Lehren und Messeinrichtungen bzw. für deren Teile zur Erhöhung der Verschleißfestigkeit vor und ist nicht auf die Anwendung bei Gewindemesseinrichtungen beschränkt.

**Tabelle 2.1**

| **Mechanische Eigenschaften** | | | |
|---|---|---|---|
| **Größe** | **Temperatur** | **Einheit** | **Typischer Wert** |
| Dichte | | g/cm³ | 2,60 - 2,70 |
| Bruchdehnung | 20°C | % | 0,06 |
| Biegefestigkeit σ₀ | 20°C | MPa | 135 |
| (4-Punkt) | | | |
| Biege E-Modul | 20°C | GPa | 205 |
| (4-Punkt) | | | |
| Weibull-Modul | | m | 19 |

**Tabelle 2.2**

| **Thermische Eigenschaften** | | | | |
|---|---|---|---|---|
| **Größe** | | **Temperatur** | **Einheit** | **Typischer Wert** |
| Wärmedehnung | | | | |
| (gem.) | | | | |
| | in plane | 20 K bis RT | 10⁻⁶/K | 0,75 |
| | orthogonal | 20 K bis RT | 10⁻⁶/K | 0,70 |

## Patentansprüche

1. Verfahren zur Herstellung eines Kalibrierkörpers, einer Lehre oder Messeinrichtung, vorzugsweise einer Gewindemesseinrichtung (12), bestehend wenigstens teilweise aus einem C-SiC-Material, das aus einem porösen und kohlenstoffhaltigen, mit Si flüssig infiltrierten Werkstoff aufgebaut ist, wobei das Si wenigstens teilweise durch Reaktion mit Kohlenstoff zu SiC umgewandelt wird, **dadurch gekennzeichnet, dass** das C-SiC-Material aus einem C-C-Werkstoff auf der Basis von durch Pressen von ineinander regellos verschlungenen Einzelfasem oder Faserfragmenten erzeugtem Kohlenstofffilz-Material erzeugt wird.

2. Verfahren nach Anspruch 1, **dadurch gekennzeichnet, dass** das Kohlenstofffilz-Material ein Zellwollfilz, ein Polyacrylnitril (PAN)-Filz oder ein Viskose-Filz oder eine Kombination dieser Materialien beinhaltet.

3. Verfahren nach Anspruch 2, **dadurch gekennzeichnet, dass** das Kohlenstofffilz-Material einen lagenförmigen Aufbau aufweist.

4. Verfahren nach wenigstens einem der vorhergehenden Ansprüche, **dadurch gekennzeichnet, dass** das Kohlenstofffilz-Material zur Ausbildung eines mit Kohlenstoff durchsetzten Kohlenstoff-Werkstoffs wenigstens einmalig mit einem Polymer imprägniert, verpresst, ausgehärtet und karbonisiert wird.

5. Verfahren nach Anspruch 4, **dadurch gekennzeichnet, dass** die Karbonisierungstemperatur in einem Bereich von 900° C bis 1000° C liegt.

6. Verfahren nach Anspruch 4 oder 5, **dadurch gekennzeichnet, dass** der Polymer durch ein Phenolharz gebildet wird.

7. Verfahren nach wenigstens einem der Ansprüche 4 bis 6, **dadurch gekennzeichnet, dass** das Kohlenstofffilz-Material in gemahlener Form verwendet wird.

8. Verfahren nach wenigstens einem der Ansprüche 4 bis 7, **dadurch gekennzeichnet, dass** der mit Kohlenstoff durchsetzte Kohlenstoff-Werkstoff graphitiert wird.

9. Verfahren nach Anspruch 8, **dadurch gekennzeichnet, dass** die Graphitierungstemperatur maximal 3000° C beträgt.

10. Verfahren nach wenigstens einem der Ansprüche 4 bis 9, **dadurch gekennzeichnet, dass** der mit Kohlenstoff durchsetzte Kohlenstoff-Werkstoff endkonturnah bearbeitet wird.

11. Verfahren nach Anspruch 10, **dadurch gekennzeichnet, dass** der endkonturnah bearbeitete und mit Kohlenstoff durchsetzte Kohlenstoff-Werkstoff durch Flüssiginfiltration von Si zu dem C-SiC-Material umgewandelt wird.

12. Verfahren nach Anspruch 11, **gekennzeichnet durch** die Endbearbeitung des C-SiC-Materials zu einem C-SiC-Körper (14, 16).

13. Kalibrierkörper, Lehre oder Messeinrichtung, vorzugsweise Gewindemesseinrichtung (12), bestehend wenigstens teilweise aus einem C-SiC-Material, das aus einem porösen kohlenstoffhaltigen und mit Si flüssig infiltrierten Werkstoff aufgebaut ist, wobei das Si wenigstens teilweise durch Reaktion mit Kohlenstoff zu SiC umgewandelt wird, **dadurch gekennzeichnet, dass** das C-SiC-Material im wesentlichen kohlenstofffaserfrei ist und einen Anteil an Si und SiC zwischen 70 Massen% und 90 Massen% und einen Anteil an Kohlenstoff zwischen 10 Massen% und 30 Massen% aufweist.

14. Kalibrierkörper, Lehre oder Messeinrichtung, vorzugsweise Gewindemesseinrichtung (12) nach Anspruch 13, **dadurch gekennzeichnet, dass** er oder sie zumindest im Bereich der Kontaktflächen zu dem zu prüfenden Medium (1) aus dem C-SiC-Material besteht.

15. Kalibrierkörper, Lehre oder Messeinrichtung, vorzugsweise Gewindemesseinrichtung (12) nach Anspruch 13 oder 14, **dadurch gekennzeichnet, dass** die Dichte des C-SiC-Materials 2,7 g/cm³ beträgt.

16. Gewindemesseinrichtung (12), insbesondere für konische Gewinde nach wenigstens einem der Ansprüche 13 bis 15, **dadurch gekennzeichnet, dass** sie wenigstens einen als Ring, Ringsegment oder Scheibe (14, 16) ausgebildeten Körper aus dem C/SiC-Material mit einem Gewinde (20, 22) zum Verschrauben mit einem zu prüfenden Gewinde (10) aufweist.

17. Gewindemesseinrichtung (12) für konische Gewinde nach Anspruch 16, **dadurch gekennzeichnet, dass** zwei Scheiben (14, 16) mit unterschiedlichen Durchmessern vorgesehen sind, wobei aus der Lage der beiden mit dem zu prüfenden Gewinde (10) verschraubten Scheiben (14, 16) relativ zueinander und/oder in Bezug zu wenigstens einer Referenzfläche (28, 36) charakteristische Maße des zu prüfenden Gewindes (10) ermittelbar sind.

18. Gewindemesseinrichtung für konische Gewinde nach Anspruch 17, **dadurch gekennzeichnet, dass** wenigstens eine Scheibe (14, 16) eine Messuhr (30, 38) trägt.

## Claims

1. A method for producing a calibration body, a calibre or measuring device, preferably a screw thread gauge (12), consisting at least in part of a C-SiC material, which is of a porous and carbon-containing material infiltrated in liquid form with Si, wherein the Si is at least partially converted by reaction with carbon to form SiC, **characterised in that** the C-SiC material is produced from a C-C material based on carbon felt material formed by compressing randomly intertwined individual fibres or fibre fragments.

2. A method according to claim 1, **characterised in that** the carbon felt material contains an artificial wool felt, a polyacrylonitrile (PAN) felt or a viscose felt or a combination of these materials.

3. A method according to claim 2, **characterised in that** the carbon felt material has a layer-type structure.

4. A method according to at least one of the preceding claims, **characterised in that** the carbon felt material is impregnated at least once with a polymer, compressed, hardened and carbonised in order to form a carbon material interpenetrated with carbon.

5. A method according to claim 4, **characterised in that** the carbonisation temperature is in the range from 900°C to 1000°C.

6. A method according to claim 4 or 5, **characterised in that** the polymer is formed by a phenolic resin.

7. A method according to at least one of claims 4 to 6, **characterised in that** the carbon felt material is used in comminuted form.

8. A method according to at least one of claims 4 to 7, **characterised in that** the carbon material interpenetrated with carbon is graphitised.

9. A method according to claim 8, **characterised in that** the graphitising temperature is at most 3000°C.

10. A method according to at least one of claims 4 to 9, **characterised in that** the carbon material interpenetrated with carbon is worked to approximately the final contour.

11. A method according to claim 10, **characterised in that** the carbon material interpenetrated with carbon and worked to approximately the final contour is converted to the C-SiC material by liquid infiltration of Si.

12. A method according to claim 11, **characterised by** the final working of the C-SiC material to form a C-SiC body (14, 16).

13. A calibration body, calibre or measuring device, preferably a screw thread gauge (12), consisting at least in part of a C-SiC material, which is composed of a porous carbon-containing material infiltrated in liquid form with Si, wherein the Si is at least partially converted by reaction with carbon to form SiC, **characterised in that** the C-SiC material is substantially free of carbon fibres and contains an amount of Si and SiC between 70 wt.% and 90 wt.%, and an amount of carbon between 10 wt.% and 30 wt.%.

14. A calibration body, calibre or measuring device, preferably a screw thread gauge (12) according to claim 13, **characterised in that** it consists of the C-SiC material at least in the region of the contact surfaces with the medium (1) to be checked.

15. A calibration body, calibre or measuring device, preferably a screw thread gauge (12) according to claim 13 or 14, **characterised in that** the density of the C-SiC material is 2.7 g/cm³.

16. A screw thread gauge (12), in particular for conical threads, according to at least one of claims 13 to 15, **characterised in that** it comprises at least one body formed as a ring, ring segment or disc (14, 16) consisting of the C-SiC material with a thread (20, 22) for threaded engagement with a thread (10) to be checked.

17. A screw thread gauge (12) for conical threads according to claim 16, **characterised in that** two discs (14, 16) of different diameters are provided, wherein characteristic dimensions of the thread (10) to be checked can be determined from the position of the two discs (14, 16) relative to one another and/or with respect to at least one reference surface (28, 36), the discs being threadedly engaged with the thread (10) to be checked.

18. A screw thread gauge for conical threads according to claim 17, **characterised in that** at least one disc (14, 16) carries a dial gauge (30, 38).

## Revendications

1. Procédé de fabrication d'un organe de calibrage, d'un gabarit ou d'une installation de mesure, de préférence d'une installation de mesure de filetage (12) réalisée au moins en partie en une matière C-SiC composée d'un matériau poreux, contenant du carbone, avec infiltration de Si liquide, le composant Si étant converti au moins en partie en SiC par réaction avec le carbone,
**caractérisé en ce que**
le matériau C-SiC est obtenu à partir d'un matériau C-C à base de compression de fibres individuelles ou de segments de fibres imbriquées, sans ordre, et constituant un feutre de carbone.

2. Procédé selon la revendication 1,
**caractérisé en ce que**
le feutre de carbone est un feutre de laine cellulaire, de polyacrylnitrile (PAN) ou d'un feutre visqueux ou d'une combinaison de ces matières.

3. Procédé selon la revendication 2,
**caractérisé en ce que**
le feutre de carbone a une structure stratifiée.

4. Procédé selon au moins l'une des revendications précédentes,
**caractérisé en ce que**
le feutre de carbone est imprégné au moins une fois avec un polymère pour réaliser un matériau à base de carbone traversé par du carbone, pressé et durci, puis carbonisé.

5. Procédé selon la revendication 4,
**caractérisé en ce que**
la température de carbonisation se situe dans une plage comprise entre 900°C et 1000°C.

6. Procédé selon la revendication 4 ou 5,
**caractérisé en ce que**
le polymère est formé par une résine phénolique.

7. Procédé selon au moins l'une des revendications 4 à 6,
**caractérisé en ce que**
le feutre de carbone est utilisé à l'état broyé.

8. Procédé selon au moins l'une des revendications 4 à 7,
**caractérisé en ce que**
le matériau de carbone traversé par du carbone est graphité.

9. Procédé selon la revendication 8,
**caractérisé en ce que**
la température de graphitage est au maximum égale à 3000°C.

10. Procédé selon au moins l'une des revendications 4 à 9,
**caractérisé en ce que**
le matériau de carbone traversé par du carbone est usiné de façon proche du contour final.

11. Procédé selon la revendication 10,
**caractérisé en ce que**
le matériau de carbone traversé par du carbone est usiné à un contour proche du contour final, est converti en un matériau C-SiC par infiltration liquide de Si.

12. Procédé selon la revendication 11,
**caractérisé en ce que**
l'usinage de finition du matériau C-SiC est fait pour donner un corps C-SiC (14, 16).

13. Corps de calibrage, gabarit ou installation de mesure, de préférence installation de mesure de filetage (12) composée au moins en partie d'une matière C-SiC construite à partir d'un matériau poreux contenant du carbone infiltré avec de la silice Si liquide, la silice Si étant convertie au moins en partie par réaction avec le carbone pour donner SiC,
**caractérisé en ce que**
la matière C-SiC est pratiquement sans fibres de carbone et une partie de Si et de SiC se situe entre 70 % en masse et 90 % en masse et une partie du carbone se situe entre 10 % en masse et 30 % en masse.

14. Corps de calibrage, gabarit ou installation de mesure, de préférence installation de mesure de filetage (12) selon la revendication 13,
**caractérisé en ce qu'**
il ou ils sont réalisés au moins dans la région des surfaces de contact avec le milieu de contrôle (1) en une matière C-SiC.

15. Corps de calibrage, gabarit ou installation de mesure, de préférence installation de mesure de filetage (12) selon la revendication 13 ou 14,
**caractérisé en ce que**
la densité de la matière C-SiC est de 2,7 g/cm³.

16. Installation de mesure de filetage (12), notamment pour un filetage conique selon au moins l'une des revendications 13 à 15,
**caractérisée en ce qu'**
elle comporte au moins un corps réalisé en forme d'anneau, de segment d'anneau ou de disque (14, 16) dans la matière C/SiC avec un filetage (20, 22) pour être vissé sur un filetage à vérifier (10).

17. Installation de mesure de filetage (12) pour des filetages coniques selon la revendication 16,
**caractérisée par**
deux disques (14, 16) avec des diamètres différents, la position des deux disques (14, 16) vissés sur le filetage à vérifier (10), l'un par rapport à l'autre et/ou par rapport à au moins une surface de référence (28, 36) permet de déterminer la mesure caractéristique du filetage à vérifier (10).

18. Installation de mesure de filetage pour des filetages coniques selon la revendication 17,
**caractérisée par**
au moins un disque (14, 16) portant un instrument de mesure (30, 38).
